# EUROPEAN PATENT APPLICATION

(11) **EP 2 453 650 A1**
(43) Date of publication of application: **16.05.2012**
(21) Application number: 10796966.9
(22) Date of filing: 27.05.2010
(51) Int. Cl.: H04N 5/445, H04N 7/173

(54) **AV DEVICE**

(30) Priority: 06.07.2009 JP 2009160140
(71) Applicant: Sharp Kabushiki Kaisha, Osaka-shi, Osaka 545-8522 (JP)
(72) Inventor: FUJIMOTO, Kinya, Osaka-shi Osaka 545-8522 (JP); YOSHITANI, Hitoshi, Osaka-shi Osaka 545-8522 (JP); OONISHI, Yoshinori, Osaka-shi Osaka 545-8522 (JP)
(74) Representative: Müller - Hoffmann & Partner
(86) International application number: PCT/JP2010/059029
(87) International publication number: WO 2011/004655

(57) **Abstract**

There is a problem in that, conventionally, an OSD of a channel sign is displayed in a uniform pattern regardless of any switching operations. For this reason, it may be difficult for a user to intuitively grasp which switching operation causes a screen display, that is, the content of the switching operation, based only on information on a screen, in the case where the user watches not a remote controller at hand but a TV screen, in particular. To solve the above-mentioned problem, an AV device is provided which has a function for displaying an animation of the channel sign from bottom to top in the case where an up key of a broadcast reception channel is operated, for example, and a function for displaying the animation of the channel sign from right to left in the case where an external input (input channel) switching operation is performed with respect to a drive which is subjected to the slot-in of an optical medium from the right side of the device for reproduction, so that the user is capable of intuitively grasping the content of the operation.

## Description

### Field of the Invention

The present invention relates to a technology of OSD displaying channel sign on a screen in response to switching operation for broadcast reception channels (frequency channel) and external input sources (external input channel).

### Background Art

Currently, an AV device is provided with various input terminals and internal drive etc. For example, by a TV receiver, a user can watch reproduction of movie (image and voice) by an internal or external device or movie distributed on the internet (image and voice) in addition to received programs in the respective received frequency channels such as digital terrestrial broadcasting/analog broadcasting and CS/BS broadcasting. Additionally, when the user does a switching of channel operation for receiving broadcast (frequency channel) or external input source (external input channel), input images from the channel selected as a result of the switching operation is displayed on a screen.

Additionally, for example, when displaying images from an 'external device connected to an external input terminal 1', in order to notify the user of such information, a 'channel sign' such as the 'external input terminal 1' is displayed on the screen as OSD (On Screen Display).

Moreover, in Japanese Unexamined Utility Model Application Publication No. H02-013372, as to such channel sign display, for example, a technology for display with an animation, where a character such as a monster brings the channel sign, is disclosed. This makes it possible to provide the channel switching operation with entertainment, thereby relieving the user's feeling of enduring a long wait time due to delay of image display particular to digital broadcasting.
Patent Reference 1: Japanese Unexamined Utility Model Application Publication No. H02-013372

### Disclosure of the Invention

### Problems that the Invention Tries to Solve

However, in the conventional OSD display of channel sign, there are the following deficiencies. Therefore, the channel sign is displayed only by a uniform display irrespective of type of switching operation. Specifically, for example, when operating channel up or channel down of the channel for receiving broadcast, or when operating switch of the external input terminals, in all cases, the channel sign is instantaneously displayed in the same portion on the screen at the same timing, and disappears. Moreover, in Japanese Unexamined Utility Model Application Publication No. H02-013372, although the channel sign display is provided with entertainment using animation, the animation display is uniformed irrespective of details related to the switching operation.

Therefore, the user cannot intuitively understand the details of the switching operation done for the screen display. Specifically, when the user watches the TV screen, without having a remote control in hand, there is difficulty in intuitively understanding the detail of the switching operation only from the information that is displayed on the screen.

### Means for Solving the Problems

In order to solve the above deficiencies, the present invention provides, for example, an AV device having functions of displaying an animation of a channel sign flowing upward in the case of a key operation to up the channel for receiving broadcast, or an animation of a channel sign flowing from right to left in the case of a switching operation for external input (input channel) to a drive for reproducing an optical media, which is slotted in the device from the right side thereof.

Specifically, an AV device, comprising an acquisition unit for instruction ID for acquiring an instruction ID in response to a switching screen operation by a user, a storage for table of correspondence for storing a table of correspondence, indicating correspondence between the instruction ID and animation information for configuring animation for channel sign to be displayed on a screen according to the instruction ID, an acquisition unit for animation information for acquiring the animation information from the storage for table of correspondence according to the acquired instruction ID, and an animation display unit for displaying the animation of the channel sign on the screen based on the acquired animation information, is provided.

Moreover, an AV device, comprising an acquisition unit for instruction ID for acquiring an instruction ID in response to a switching screen operation by a user, a storage for function for storing a function for generating animation information for configuring an animation on a screen for a channel sign to be displayed on the screen according to the instruction ID, a generation unit for animation information for generating the animation information by utilizing the stored function according to the acquired instruction ID, and an animation display unit for displaying the animation of the channel sign on the screen based on the generated animation information, is provided.

### Effects of the Invention

According to the above AV devices of the present invention, it is possible to display the channel sign on the screen by OSD with an animation determined by utilizing the table or function, such that the animation matches the operation to switch channels for receiving broadcast or external input sources. Therefore, the user can intuitively understand the detail of the switching operation, for example, by moving the direction of the animation.

### BRIEF DESCRIPTION OF THE DRAWINGS

Fig. 1 is a diagram showing an example of animation display of a channel sign in an AV device of a first embodiment.
Fig. 2 is a diagram showing an example of a functional block of the AV device of the first embodiment.
Fig. 3 is a diagram showing an example of acquiring an instruction ID in a storage for instruction ID of the AV device of the first embodiment.
Fig. 4 is a diagram showing an example of animation information of the AV device of the first embodiment.
Fig. 5 is a diagram showing an example of hardware configuration of the AV device of the first embodiment.
Fig. 6 is a flowchart showing processes in the AV device of the first embodiment.
Fig. 7 is a diagram showing an example of a functional block of an AV device of a second embodiment.
Fig. 8 is a flowchart showing processes in the AV device of the second embodiment.

### Description of Reference Numerals

0200 AV device
0201 Acquisition unit for instruction ID
0202 Storage for table of correspondence
0203 Acquisition unit for animation information
0204 Animation display unit

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof.

The first embodiment will mainly describe Claims 1, 2, and 3. The second embodiment will mainly describe Claims 4, 5, and 6.

### «First Embodiment»

### <Concept of First Embodiment>

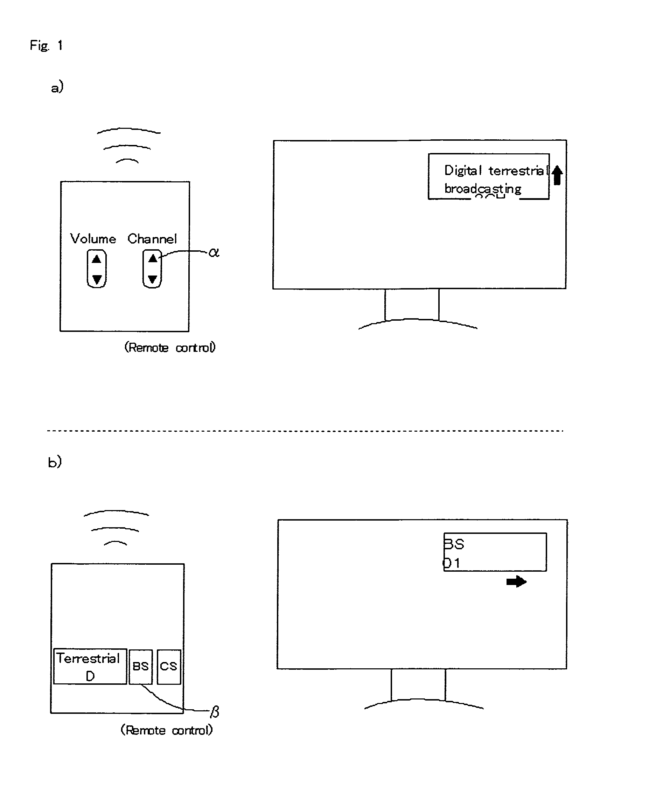

Fig. 1 is a diagram showing an example of animation display of a channel sign in an AV device of a first embodiment. As shown in Fig. 1(a), for example, up button α of a channel for receiving broadcast is operated, and the channel for receiving broadcast is switched from 1Ch to 2Ch of digital terrestrial broadcasting. Then, the AV device of a first embodiment displays an animation of a channel sign of the 'Digital terrestrial broadcasting 2Ch', such that the channel sign moves upward as indicated by an arrow, and is displayed in a predetermined frame in response to change of displayed image upon switching.

Moreover, as shown in Fig. 1(b), for example, when BS button β is pressed, and an operation to change broadcasting type from 'Digital terrestrial broadcasting' to 'BS' is received, the AV device displays an animation of a channel sign of the 'BS 101', such that the channel sign moves rightward as indicated by an arrow, and is displayed in a predetermined frame in response to change of displayed image upon switching.

As described above, the user can intuitively understand without watching a remote control in his hand that, for example, the operation for channel-up or the operation to change the broadcast type is done. Moreover, the channel sign is displayed in the form of animation, so that the use can enjoy its visual content. Therefore, it is possible to relieve the user's feeling of enduring a long wait time due to delay of image display particular to digital broadcasting.

### <Functional Configuration of First Embodiment>

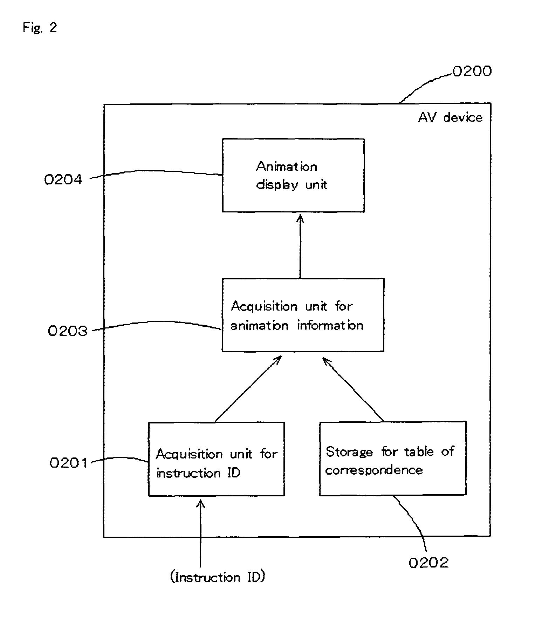

Fig. 2 is a diagram showing an example of a functional block of the AV device of the first embodiment. Note that, the functional block of the integrated interface device can be implemented by hardware, software, or both hardware and software. Specifically, in the case of using a computer, the respective units are implemented by the hardware configured by a CPU, a main memory (a main storage), a bus, a secondary storage device (e.g., a hard disk or a nonvolatile memory, a storage media such as CD-ROM or DVD-ROM, or a reading drive for the above media), input device for inputting information, display device, printing device, other peripheral devices, and interface for the other peripheral devices and communication interface; and driver program for controlling the above hardware, other application programs, and application for user interface.

Subsequently, the CPU executes operation in accordance with the program developed on the main memory, so that processing, storing and outputting of the data, inputted through the input device or the interface etc. and stored in the memory of the hard disk, are carried out, and instructions to control the hardware and software are generated. Moreover, the present invention can be implemented not only as an apparatus but also as a method thereof. Moreover, a portion of such inventions may be configured as software. Furthermore, a software product used for causing a computer to execute the software, and the recording medium, in which the software is installed, should be included in the technical scope of the present invention (the same applies throughout the entire specification).

Note that the 'AV device' is a device that can reproduce various content data (e.g., movie, image, text, and voice), and in the present invention, is a device having a plurality of channels as input source of the content, and having a function of outputting the content input via a channel selected from the channels. Specifically, examples of the device include a TV receiver, a recording/reproducing device, a radio receiver, a mobile phone, an electronic book reader, and a photo viewer (camera).

Moreover, the 'channel' in the present invention is not limited to the 'channel for receiving broadcast (frequency channel)' indicating frequency band for transmitting TV broadcast wave etc, and means a 'transmission path' in the general meaning for transmitting data to be displayed on the screen. Therefore, for example, an 'input channel' indicating input route from an external or a internal device, and a 'broadcast type channel' indicating broadcast type (route of media) such as BS, CS, or digital terrestrial broadcasting are included in the channel.

As shown in Fig. 2, an 'AV device' (0200) of the first embodiment comprises an 'acquisition unit for instruction ID' (0201), a 'storage for table of correspondence' (0202), an 'acquisition unit for animation information' (0203), and an 'animation display unit' (0204).

The 'acquisition unit for instruction ID' (0201) has a function of acquiring an instruction ID in response to a switching screen operation by a user, and can be implemented, for example, on a remote operation device such as a remote control, or on a direct operation device such as an operation panel, or by a mechanism for translating operations received by such operation devices. Additionally, the 'operation to switch screen' is an operation to switch contents displayed on the screen, and includes the various operations to switch channels such as the 'channel for receiving broadcast', the 'channel for external/intemal input', and the 'broadcast type channel' as described above.

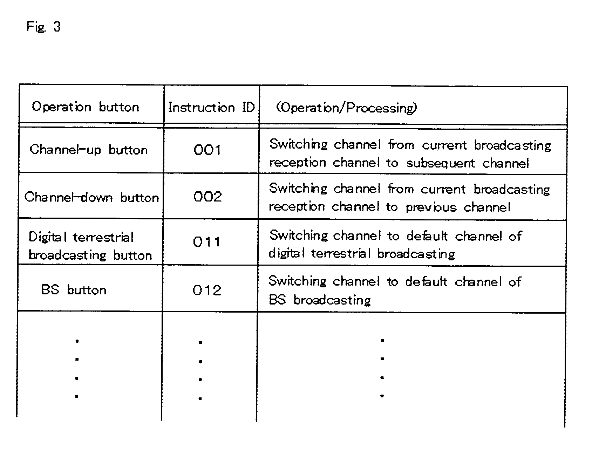

When receiving various button operations or a touch operation to a touch pad of the operation device, by using an operation signal generated in response to the received operation as a key, an operation code table as shown in Fig. 3 is referenced, and corresponding instruction ID is acquired.

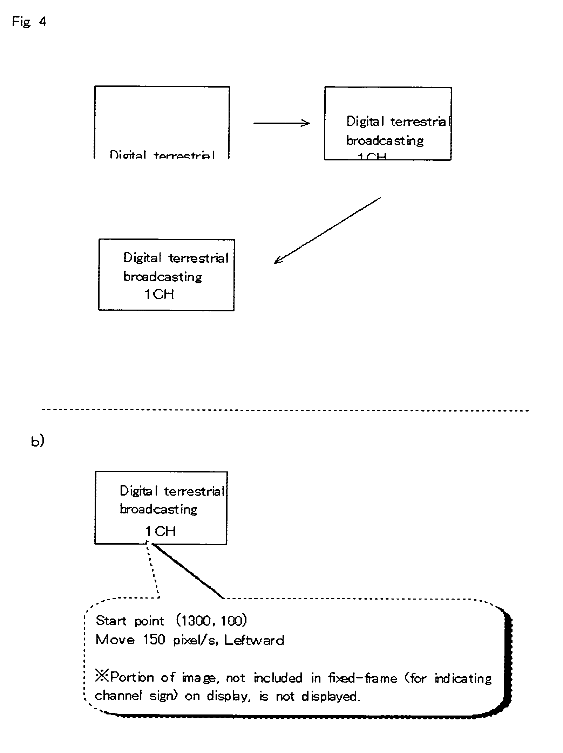

The 'storage for table of correspondence' (0202) has a function of storing a table of correspondence, indicating correspondence between the instruction ID and animation information, and can be implemented, for example, by a flash memory, a HDD, or various recording media. The 'animation information' is information for configuring animation for channel sign to be displayed on a screen according to the instruction ID, and examples of the information include frame image information configured by a sequence of a plurality of still images as shown in Fig. 4(a), and information for specifying moving direction and moving distance concerning a still image as show in Fig. 4(b). With reference to the table of correspondence indicating the correspondence between the animation information and the instruction ID, for example, it is possible to specify an animation of a channel sign in response to an instruction ID indicating a channel-up operation.

Note that, the correspondence between the animation information and the instruction ID is not limited, and from the purpose of the present invention for the user to intuitively understand the detail of operation, correspondence between a direction of the operation (e.g., a direction of the operation, a direction of action caused by the operation, a direction designated by user's operation, or a direction intended by the user on the operation) and a moving direction of an animation should be established as a premise. Therefore, it is more preferable that the storage for table of correspondence comprises a 'storage section for up-down table' that is not indicated in diagrams. This 'storage section for up-down table' stores an up-down table, and based on a determination whether the processing indicated by the instruction ID is a processing to change channel in a direction, in which a current channel number is changed to a larger channel number in a cyclical sequence of channel numbers starting from 1 and returning to 1, or a processing to change channels in the opposite direction, the table is used for setting the animation information to be acquired to an animation of channel signs flowing downward in the case of the processing to change channels in the direction, in which the current channel number is changed to the larger channel number, or to an animation of channel signs flowing upward in the case of the processing to change channel in the opposite direction.

Thus, for example, in the case of the channel for receiving broadcast, where cyclical numbers from 1 to 12 are operated by up-down operation, an animation, where the channel sign of the channel designated by the operation flows in the same direction as the up-down operation (e.g., in the case of up-operation, it flows upward, and in the case of down-operation, it flows downward), may be set.

Moreover, it is more preferable that the storage for table of correspondence comprises a 'storage section for side scroll table' that is not indicated in diagrams. This 'storage section for side scroll table' stores a side-scroll table, and based on a determination whether the processing indicated by the instruction ID is a processing other than a selection of channel for receiving broadcast, the table is used for setting the animation information to be acquired to an animation of channel signs flowing in a traverse direction in the case of the processing other than the selection of channel for receiving broadcast.

Here, for example, when the slot of the optical disc drive is located on the right side of the TV device, according to a direction of user's operation to insert the disc from the right side, in driving time of the optical drive, it is preferable to set an animation, where the channel sign scrolls from right to left for a predetermined distance. Moreover, in driving time of the built-in HDD, it is preferable to set an animation distinguishable from the animation for the optical drive, where the channel sign scrolls from left to right for a predetermined distance.

Moreover, for example, in the case of TV device, an external input device such as a recorder or player is placed under the TV device in many cases, it is preferable to set an animation, where the channel sign upon switching to an external input scrolls upward for a predetermined distance. Moreover, when switching to channel for receiving broadcast, it is preferable to set an animation, where the channel sign scrolls downward for a predetermined distance in order to express reception of radio waves in the air.

Furthermore, when directly designating the channel number for receiving broadcast, for example, it is preferable to set an animation, where the channel sign gradually becomes enlarged in the position, or when switching broadcast type channel as BS, CS or Digital terrestrial broadcasting, if buttons are horizontally arranged in the remote control, it is preferable to set an animation, where the channel sign scrolls in the direction of arrangement. Moreover, it is preferable to set an animation with expression of receiving radio waves, where the channel sign of each broadcast type channel falls from a start point in the upper-left portion, upper portion, or upper-right portion.

Thus, by establishing the correspondence between the direction of channel switching operation and the direction of animation for the channel sign, such that the directions are the same, the user can intuitively understand the detail of the switching operation.

The 'acquisition unit for animation information' (0203) has a function of acquiring the animation information from the storage for table of correspondence according to the acquired instruction ID, and can be implemented, for example, by calculation circuit, main memory, and a program for acquiring animation information etc. Specifically, by using the instruction ID acquired in response to reception of the user's switching operation as a key, the table of correspondence is retrieved by the calculation circuit's logical calculation processing, thereby acquiring the animation information according to the instruction ID.

The 'animation display unit' (0204) has a function of displaying the animation of the channel sign on the screen based on the acquired animation information, and can be implemented, for example, by the calculation circuit, a VRAM, a display device, and a program for displaying animation etc. Thus, for example, when the user does a channel up operation for receiving broadcast, an animation, where the channel sign moves upward, is displayed on the screen, or when the user does an operation to switch reproduction of the optical drive, into which an optical disc is inserted from the right side, an animation, where the channel sign moves from right to left, is displayed.

### <Other First Embodiment>

Moreover, in the first embodiment, a configuration, where switch of display for the content itself is expressed by an animation in addition to the animation of the channel sign in response to the user's operation to switch screens, may be used. For example, an animation, where the channel sign moves upward in response to the channel up operation, is displayed, and simultaneously, the switch of screen for the content by the up-operation is expressed by an animation of up-motion, such that the user can understand the direction of operation. Moreover, inversely with the animation of the channel sign, the switch of screen may be expressed by an animation of down-motion, and the direction of operation is expressed by the motion of the channel sign, such that the animations of both up and down motions enhances visual entertainment.

Specifically, in addition to the configuration of Fig. 2, the AV device, further comprising a second storage for table of correspondence for storing a table of correspondence, indicating correspondence between the instruction ID and second animation information for configuring animation for content to be displayed on a screen upon switch of the content according to the instruction ID, a second acquisition unit for animation information for acquiring the second animation information from the second storage for table of correspondence according to the acquired instruction ID, and a second animation display unit for displaying the animation of the switch of the content on the display screen based on the acquired second animation information, is provided.

Moreover, in addition to the above, a configuration, where time for switch of the screen by the operation to switch screen is acquired, for example, from a data table, thereby determining display time of the animation according to the time, may be used. Specifically, as described above, the digital broadcasting requires time for demodulation etc, so that the screen display upon the switch of channel for receiving digital broadcast requires a longer time than the screen display upon the switch of channel for external input. Therefore, in the switch of channel for receiving digital broadcast, display time for the animation is calculated, such that the animation of the channel sign ends after a long duration at the point of completion of the display switching of the screen. Meanwhile, in the switch of channel for external input, the display time for the animation is calculated, such that the animation of the channel sign ends after a short duration. For this purpose, the AV device of the first embodiment may comprise an acquisition unit for time for switching screen that acquires time for switching screen according to the instruction ID, and a calculation unit for animation display time that calculates animation display time by utilizing a predetermined function or a table data based on the acquired time for switching screen.

### <Hardware Configuration of First Embodiment>

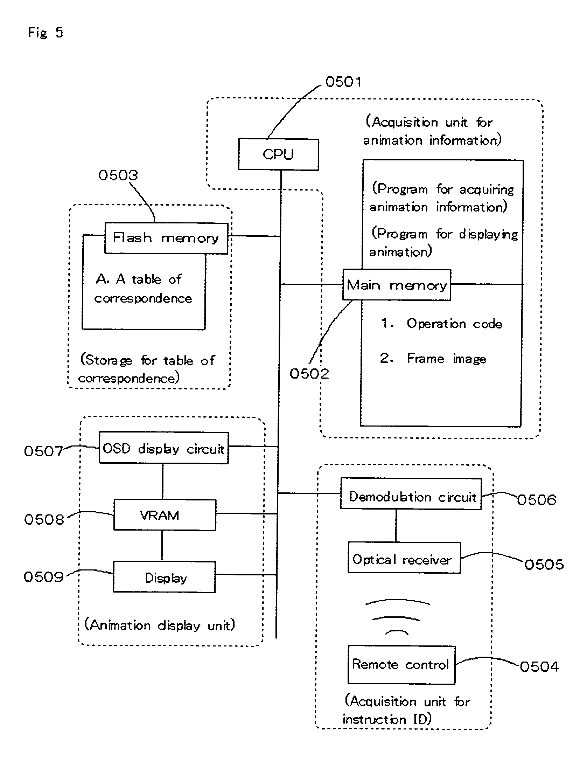

Fig. 5 is a schematic diagram exemplifying a configuration of the AV device when the above functional components are implemented as hardware. Fig. 5 is a diagram showing an example of a hardware configuration of the 'AV rack' of the first embodiment. With reference to Fig. 5, description of operation of each hardware of the AV device of the first embodiment will be provided. As shown in Fig. 5, the 'AV device' of the first embodiment comprises a 'CPU' (0501), and a 'main memory' (0502), which perform as the acquisition unit for animation and carry out various calculations. Moreover, the AV device comprises a 'flash memory' (0503) as the storage for table; a 'remote control' (0504), an 'optical receiver' (0505), and a 'demodulation circuit' (0506), which perform as the acquisition unit for instruction ID; and an 'OSD display circuit' (0507), a 'VRAM' (0508), and a 'display' (0509), which perform as the animation display unit. These components are mutually connected via a data communication path such as a 'system bus', thereby executing transmission/reception and processing of information.

Subsequently, a program is readout in the 'main memory', and the 'CPU' executes various calculations in accordance with processes indicated by the program with reference to the readout program. A plurality of addresses are assigned to the 'main memory' and the 'flash memory', and in the calculation by the 'CPU', it is possible to specify the address and to access to stored data, thereby executing the calculation utilizing the data.

Here, when the user operates the channel-up button of the 'remote control', the operation code is modulated into infrared signal, and is outputted. Subsequently, the infrared signal received by the 'optical receiver' is demodulated by the 'demodulation circuit', and the operation code indicating the up-operation is stored in the 'main memory' at the address 1. Subsequently, the 'CPU' interprets the program for acquiring animation information, and executes logical calculation to search the table of correspondence stored in the 'flash memory' using the operation code stored in the 'main memory' at the address 1 as a key in accordance with a result of the interpretation. Subsequently, the animation information having correspondence with the operation code is specified and acquired from the table of correspondence. When the animation information is configured by information for only specifying the moving direction and moving distance of the channel sign, and the channel sign image itself is not specified by the animation information, the channel sign image is separately generated or acquired according to the instruction ID. Subsequently, based on the acquired channel sign image, a plurality of frame images are generated in accordance with the moving direction and moving distance indicated by the animation information, and are stored in the 'main memory' at the address 2. Subsequently, the 'CPU' interprets the program for displaying animation, and sequentially outputs the plurality of frame images, indicated or generated by the animation information in accordance with a result of the interpretation, to the 'OSD circuit'.

Subsequently, the 'CPU' acquires screen images from the channel designated by the acquired instruction ID, and draws on the 'VRAM'. Subsequently, the plurality of frame images from the 'OSD circuit' are overlapped with the screen images drawn on the 'VRAM', and the screen images, overlapped with the channel sign expressed by an animation of the plurality of frame images, are outputted to and displayed on the 'display'.

### <Processing Flow of First Embodiment>

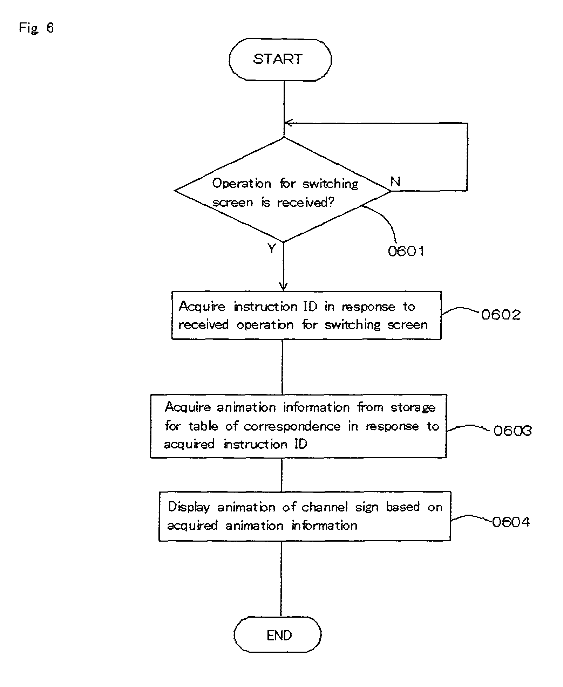

Fig. 6 is a flowchart exemplifying a process in the AV device in the first embodiment of the present invention. Note that, the following steps may be carried out by the above hardware configuration, or may be processing steps for configuring a program for controlling a computer, which is recorded in a media.

As shown in Fig. 6, at the outset, when receiving the user's operation to switching screen, for example, by using the remote control etc. (step S0601), the instruction ID is received according to the operation (step S0602). Subsequently, the animation information is acquired from the above-mentioned storage for table of correspondence according to the acquired instruction ID (step S0603), and based on the acquired animation information, an animation of the channel sign is displayed on the screen, for example, such that the direction of the operation and the moving direction of the animation are the same (step S0604).

### <Brief Description of Effects of First Embodiment>

Thus, according to the AV device of the first embodiment, for example, the direction of the animation of the channel sign is the same as the direction of the operation to switch channel, so that it is possible for the user to intuitively understand the detail of the operation to switch.

### «Second Embodiment»

### <Concept of Second Embodiment>

An AV device of a second embodiment, similar to the first embodiment, has a function of displaying, for example, such that the direction of the animation of the channel sign is the same as the direction of the operation to switch channels. The difference of the AV device of a second embodiment is that the determination of the animation of channel sign is carried out by utilizing function, not by the table of correspondence.

### <Functional Configuration of Second Embodiment>

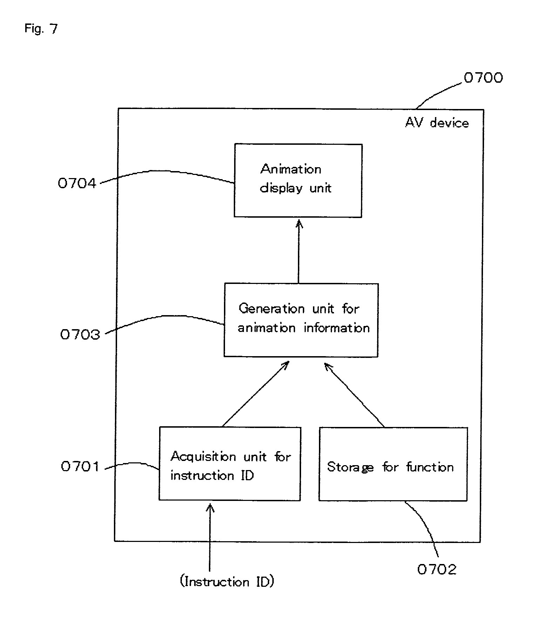

Fig. 7 is a diagram showing an example of a functional block of an AV device of a second embodiment. As shown in Fig. 7, an 'AV device' (0700) of the second embodiment comprises an 'acquisition unit for instruction ID' (0701), a 'storage for function' (0702), an 'generation unit for animation information' (0703), and an 'animation display unit' (0704). Note that the 'acquisition unit for instruction ID' and the 'animation display unit' are the same as those of the first embodiment, so that descriptions thereof are omitted.

The 'storage for function' (0702) stores a function for generating animation information according to the instruction ID, and can be implemented by the flash memory, HDD, and other storage media. Note that the animation information itself is the same as that of the first embodiment. Moreover, in the second embodiment, the storage for function stores a function such as y = f(x) for generating the animation information, not the table of correspondence of the first embodiment. For example, the instruction ID is converted into a numerical value x, whose plus and minus is inversed according to the direction of operation, and is substituted into the function y = f(x), and calculation of the moving direction (plus or minus) and moving distance y are executed, thereby generating the animation information.

Note that, of course, similar to the above-mentioned table of correspondence, it is preferable that this function y = f(x) is a function, where the animation information is generated, such that the correspondence between the direction of the operation and the moving direction of the animation are established.

The 'generation unit for animation information' has a function of generating the animation information by utilizing the stored function according to the acquired instruction ID, and can be implemented by the calculation circuit, main memory, and the program for generating animation information. Specifically, as described above, for example, the instruction ID is converted into a numerical value x, whose plus and minus is inversed according to the direction of operation, and is substituted into the function y = f(x), and calculation of the moving direction (plus or minus) and moving distance y are executed, thereby generating the animation information.

Moreover, by a configuration, where processing time for the operation indicated by the instruction ID is acquired, a function for determining display time of an animation according to the processing time may be set. Moreover, such function may be incorporated in the first embodiment.

Thus, also in the AV device of the second embodiment, for example, when the user does a channel up operation for receiving broadcast, an animation, where the channel sign moves upward, is displayed on the screen, or when the user does an operation to switch reproduction of the optical drive, into which an optical disc is inserted from the right side, an animation, where the channel sign moves from right to left, is displayed.

Moreover, in the other embodiment of the second embodiment, similar to the above embodiment, a configuration, where the switch of screen for the content itself is also displayed by the animation in addition to the animation of the channel sign according to the user's operation to switch screen, may be used.

### <Processing Flow of Second Embodiment>

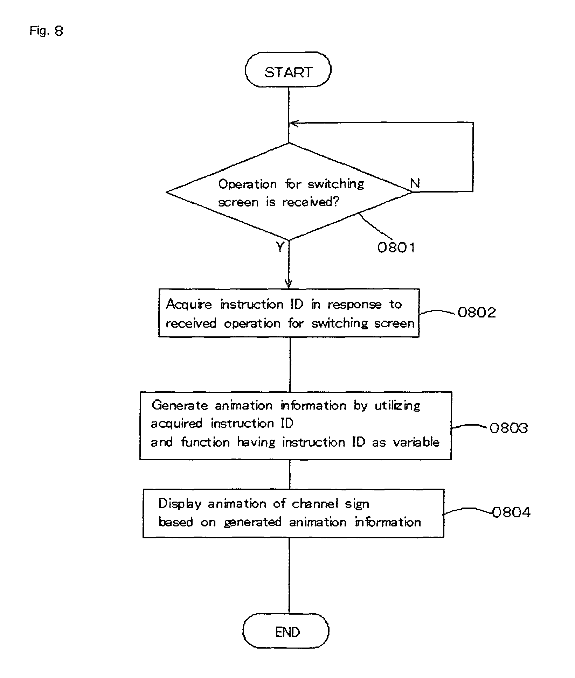

Fig. 8 is a flowchart showing processes in the AV device of the second embodiment. Note that, the following steps may be carried out by the above hardware configuration, or may be processing steps for configuring a program for controlling a computer, which is recorded in a media.

As shown in Fig. 8, at the outset, when receiving the user's operation to switch screen, for example, by using the remote control etc. (step S0801 the instruction ID is received according to the operation (step S0802). Subsequently, the animation information is generated by utilizing the function y = f(x) having the acquired instruction ID as variable (step S0803). Subsequently, based on the generated animation information, for example, an animation of the channel sign is displayed on the screen, such that the direction of the operation and the moving direction of the animation are the same (step S0804).

### <Brief Description of Effects of Second Embodiment>

Thus, according to the AV device of the second embodiment, for example, the direction of the animation of the channel sign is the same as the direction of the operation to switch channel, so that it is possible for the user to intuitively understand the detail of the operation to switch.

## Claims

1. An AV device, comprising:
an acquisition unit for instruction ID for acquiring an instruction ID in response to a switching screen operation by a user;
a storage for table of correspondence for storing a table of correspondence, indicating correspondence between the instruction ID and animation information for configuring animation for channel sign to be displayed on a screen according to the instruction ID;
an acquisition unit for animation information for acquiring the animation information from the storage for table of correspondence according to the acquired instruction ID; and
an animation display unit for displaying the animation of the channel sign on the screen based on the acquired animation information.

2. The AV device according to Claim 1,
wherein said storage for table comprises
a storage section for up-down table for storing an up-down table, based on a determination whether the processing indicated by the instruction ID is a processing to change channel in a direction, in which a current channel number is changed to a larger channel number in a cyclical sequence of channel numbers starting from 1 and returning to 1, or a processing to change channel in the opposite direction, the table being used for setting the animation information to be acquired to an animation of channel signs flowing downward in the case of the processing to change channel in the direction, in which the current channel number is changed to the larger channel number, or to an animation of channel signs flowing upward in the case of the processing to change channel in the opposite direction.

3. The AV device according to Claim 1 or 2,
wherein said storage for table comprises
a storage section for side scroll table for storing a side-scroll table, based on a determination whether the processing indicated by the instruction ID is a processing other than a selection of channel for receiving broadcast, the table being used for setting the animation information to be acquired to an animation of channel signs flowing in a traverse direction in the case of the processing other than the selection of channel for receiving broadcast.

4. An AV device, comprising:
an acquisition unit for instruction ID for acquiring an instruction ID in response to a switching screen operation by a user;
a storage for function for storing a function for generating animation information for configuring an animation on a screen for a channel sign to be displayed on the screen according to the instruction ID;
a generation unit for animation information for generating the animation information by utilizing the stored function according to the acquired instruction ID; and
an animation display unit for displaying the animation of the channel sign on the screen based on the generated animation information.

5. The AV device according to Claim 4
wherein said storage for function comprises
a storage section for up-down function for storing an up-down function, based on a determination whether the processing indicated by the instruction ID is a processing to change channel in a direction, in which a current channel number is changed to a larger channel number in a cyclical sequence of channel numbers starting from 1 and returning to 1, or a processing to change channel in the opposite direction, the function being used for setting the animation information to be generated to an animation of channel signs flowing downward in the case of the processing to change channel in the direction, in which the current channel number is changed to the larger channel number, or to an animation of channel signs flowing upward in the case of the processing to change channel in the opposite direction,

6. The AV device according to Claim 4 or 5
wherein said storage for side-scroll function comprises
a storage section for side-scroll function for storing a side-scroll function, based on a determination whether the processing indicated by the instruction ID is a processing other than a selection of channel for receiving broadcast, the function being used for setting the animation information to be generated to an animation of channel signs flowing in a traverse direction in the case of the processing other than the selection of channel for receiving broadcast.

7. A method for operating an AV device that comprises a storage for table of correspondence for storing a table of correspondence, indicating correspondence between the instruction ID and animation information for configuring animation for channel sign to be displayed on a screen according to the instruction ID, the method comprising the steps of:
acquiring an instruction ID in response to a switching screen operation by a user;
acquiring the animation information from the storage for table of correspondence according to the acquired instruction ID; and
displaying the animation of the channel sign on the screen based on the acquired animation information.

8. A method for operating an AV device that comprises a storage for function for storing a function for generating animation information for configuring an animation on a screen for a channel sign to be displayed on the screen according to the instruction ID, the method comprising the steps of:
acquiring an instruction ID in response to a switching screen operation by a user;
generating the animation information by utilizing the stored function according to the acquired instruction ID; and
displaying the animation of the channel sign on the screen based on the generated animation information.
